# EUROPÄISCHE PATENTSCHRIFT

(11) **EP 1 226 655 B1**
(45) Veröffentlichungstag und Bekanntmachung des Hinweises auf die Patenterteilung: **09.04.2003**
(21) Anmeldenummer: 00987067.6
(22) Anmeldetag: 03.11.2000
(51) Int. Cl.: H04B 1/38, H04B 1/00, H04B 1/58, B60R 16/02

(54) **ANORDNUNG ZUR MEHRKANALIGEN SIGNALÜBERTRAGUNG ZWISCHEN BEWEGTEN TEILEN**
ARRANGEMENT FOR MULTICHANNEL SIGNAL TRANSMISSION BETWEEN MOBILE UNITS
DISPOSITIF DE TRANSMISSION DE SIGNAUX MULTIVOIE ENTRE DES UNITES MOBILES

(30) Priorität: 03.11.1999 DE 19952980
(43) Veröffentlichungstag der Anmeldung: 31.07.2002
(73) Patentinhaber: Schleifring und Apparatebau GmbH, 82256 Fürstenfeldbruck (DE)
(72) Erfinder: LOHR, Georg, 82223 Eichenau (DE)
(74) Vertreter: Münich, Wilhelm, Dr.
(86) Internationale Anmeldenummer: DE0003856
(87) Internationale Veröffentlichungsnummer: WO01033732

(56) Entgegenhaltungen:
- EP-A- 0 849 121
- US-A- 3 859 469
- US-A- 4 697 092

## Beschreibung

### Technisches Gebiet

Die Erfindung bezieht sich auf eine Anordnung, mit deren Hilfe eine große Anzahl unterschiedlicher Signale gleichzeitig zwischen gegeneinander beweglichen Einheiten übertragen werden können.

### Stand der Technik

Für die Signalübertragung zwischen gegeneinander bewegten Einheiten sind verschiedene Techniken bekannt. Häufig werden hierzu schleifende Kontaktanordnungen, wie Kombinationen aus Stromabnehmern und Stromschienen oder im Falle einer Drehbewegung Schleifringe eingesetzt. Weiterhin sind auch kontaktlose Systeme, die auf kapazitiven, induktiven oder optischen Effekten basieren, zur Signalübertragung zwischen beweglichen Einheiten bekannt. In den meisten Einsatzfällen genügt es nicht, ein einzelnes Signal zu übertragen. Meistens stellt sich die Aufgabe, eine große Anzahl unterschiedlicher Signale zu übertragen. Bei den bekannten Übertragungstechnologien sind die Kosten für einen einzelnen Signalweg relativ hoch und sie wachsen in der Regel proportional mit der Anzahl der zu übertragenden Signale an. Zudem ist häufig die Raumsituation so eng, daß nicht für alle Signale einzelne Übertragungswege vorgesehen werden können. Eine Verbesserung dieses Problems ist in der US-Patentanmeldung 4,697,092 beschrieben, welche eine Anordnung nennt, die im Fall eines Kraftfahrzeugs einerseits ein Gleichstromsignal für die Hupe und andererseits ein mittels eines Trägers moduliertes Signal über den gleichen mechanischen Schleifring überträgt. Dazu werden die Daten mittels eines Modulators z.B. eines FSK-moduliert und im Empfangsteil entsprechend demoduliert. Dieser Anordnung haftet der Nachteil an, daß ein zusätzlicher technischer Aufwand zur Modulation und Demodulation des Signales notwendig ist. Zudem erhöht sich durch die hier beschriebene Modulation die Bandbreite des übertragenen Signals und außerdem wird das Signal in einem höheren Frequenzband übertragen, in dem auch eine bessere Abstrahlung (Störstrahlung) möglich ist. Dadurch verschlechtern sich die EMV-Eigenschaften des Gesamtsystems (Störausstrahlung und Störfestigkeit) wesentlich. Außerdem ist es schwierig über weit ausgedehnte Anordnungen, wie lange Kontaktbahnen oder Schleifringe mit großem Durchmesser, breitbandige Signale zu übertragen. Hier ist es besonders wichtig, auf eine niedrige Frequenz mit einer niedrigen Signalbandbreite zu achten.

In der US-Patentschrift 3859469 wird eine Anordnung zur mehrkanaligen bidirektionalen Signalübertragung zwischen zwei durch ein Kabel verbundenen Einheiten beschrieben. Dort erfolgt die Kombination bzw. Trennung der Signale mittels unterschiedlicher Filter. So werden verschiedenen Richtungen verschiedene spektrale Anteile zugeordnet. Ein wesentlicher Nachteil dieser Anordnung ist die reduzierte Bandbreite, da sich die gesamte, für die Übertragung durch das Kabel verfügbare Bandbreite auf die beiden Richtungen aufteilt. Es entspricht die zur Übertragung durch das Kabel benötigte Bandbreite mindestens der Summe aus den Bandbreiten der Signale für die einzelnen Richtungen. Damit werden durch den Bedarf einer Bandbreite, welche über der Bandbreite der Nutzsignale liegt, die EMV-Eigenschaften deutlich verschlechtert. Andererseits wird bei einer vorgegebenen festen Übertragungsbandbreite der erzielbare Daten- bzw. Informationsdurchsatz reduziert.

### Darstellung der Erfindung

Aufgabe der Erfindung ist es, eine Anordnung zur mehrkanaligen Signalübertragung zu entwickeln, welche über wenige Übertragungswege einer Übertragungseinrichtung zwischen beweglichen Teilen, eine vielkanalige Signalübertragung bei sehr guten EMV-Eigenschaften und niedrigen Kosten ermöglicht.

Die Lösung der Aufgabe ist im Anspruch 1 angegeben. Vorteilhafte Weiterbildungen sind Gegenstand der Unteransprüche.
Die Anordnung besteht aus einer ersten Sende-/Empfangseinheit 1 und einer zweiten Sende-/Empfangseinheit 3, welche mittels der Übertragungseinrichtung 2 zur Übertragung von Signalen zwischen beweglichen Einheiten verbunden sind. Jede dieser Sende-/Empfangseinheiten ist in der Lage, Signale auszusenden bzw. zu empfangen. Jede dieser Sende-/Empfangseinheiten besitzt eine Filterbank 4 (19), welche aus den zu übertragenden Signalen 5a, 5b, 5c, 5d (15a, 15b, 15c, 15d) charakteristische Spektralanteile herausfiltert und diese zu einem zu übertragenden Summensignal 13 (13b) addiert. Weiterhin besitzen diese Sende-/Empfangseinheiten Richtungsweichen 9 (10), welche Sende-/und Empfangssignale richtungsselektiv addieren bzw. selektieren und diese zu einem Signal kombinieren, welches mittels der Übertragungseinrichtung 2 zur jeweils anderen Sende-/Empfangseinheit übertragen wird. Weiterhin be sitzt jede dieser Sende-/Empfangseinheiten eine zur Sendeeinheit der jeweils anderen Sende-/Empfangseinheit passenden Filterbank 12 (6), welche aus dem übertragenen Signal die einzelnen Spektralanteile herausfiltert und diese wieder in ihre Teilsignale zerlegt. Weiterhin befindet sich in jeder Sende-/Empfangseinheit ein Satz Regeneratoren 17a, 17b, 17c, 17d, (7a, 7b, 7c, 7d), welche aus den Teilsignalen der Filterbank den Originalsignalen entsprechende Signale 18a, 18b, 18c, 18b, (8a, 8b, 8c, 8d) wiederherstellen. Die Regeneratoren können beispielsweise Verstärker zur Wiederherstellung des ursprünglichen Signalpegels oder auch Komparatoren zur Impulsformung sein. Ebenso können in diesen Regeneratoren auch Speicherelemente zur Wiederherstellung rechteckförmiger Signale aus kurzen Impulsen enthalten sein.

Im allgemeinen ist die Anzahl der übertragenen Signale pro Richtung nicht nur auf 4 festgelegt. In dieser beispielhaften Darstellung wurde die Anzahl 4 der besseren Übersichtlichkeit halber gewählt. Die Anzahl der Signale kann auch in beide Richtungen unterschiedlich sein.

Der Begriff Richtungsweiche bezieht sich auf eine Einheit zur richtungsselektiven Trennung von Signalen. Derartige Schaltungen sind auch unter dem Begriff Gabelschaltung oder in der Hochfrequenztechnik als Richtkoppler bekannt. Durch den Einsatz einer solchen Richtungsweiche lassen sich im gleichen Frequenzband Signale in beiden Richtungen übertragen. Selbstverständlich können auch Signale in entgegengesetzter Richtung mittels unterschiedlicher Frequenzbänder ohne Richtungsweiche übertragen werden.

In einer weiteren vorteilhaften Ausgestaltung der Erfindung wird im Falle einer unidirektionalen Datenübertragung auf der Senderseite eine erste Sende-/Empfangseinheit 1 eingesetzt, welche ausschließlich einen Sendeteil enthält sowie auf der Empfangsseite eine zweite Sende-/Empfangseinheit 3 eingesetzt, welche ausschließlich einen Empfangsteil enthält. Da hier nur in eine Richtung Signale übertragen werden, können auch die beiden Richtungsweichen 9 und 10 entfallen.

In einer weiteren vorteilhaften Ausführung der Erfindung können einzelne Regeneratoren entfallen, wenn die zu übertragenden Signale weitestgehend durch das übertragene Signalspektrum charakterisiert werden. Dies ist insbesondere dann der Fall, wenn ohnehin Bandbegrenzsignale in ihrem ganzen Frequenzband übertragen werden.

In einer weiteren Ausgestaltung der Erfindung wird die Richtungsweiche 9 bzw. 10 frequenzselektiv ausgeführt. Dadurch kann in vielen Fällen das Gesamtsystem aus Richtungsweiche und Filterbänken mit geringerem Aufwand realisiert werden.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen hinsichtlich der Offenbarung aller im Text nicht näher erläuterten erfindungsgemäßen Einzelheiten ausdrücklich verwiesen wird. Es zeigen:
Fig. 1 erfindungsgemäße Anordnung
Fig. 2 Anordnung für die bidirektionale Kommunikation
Fig. 3 beispielhafte Ausführung der erfindungsgemäßen Anordnung
Fig. 4 beispielhafte spektrale Aufteilung der übertragenen Signale
Fig. 5 beispielhaftes Spektrum eines Bussignales
Fig. 6 beispielhaftes Bussignal im Zeitbereich

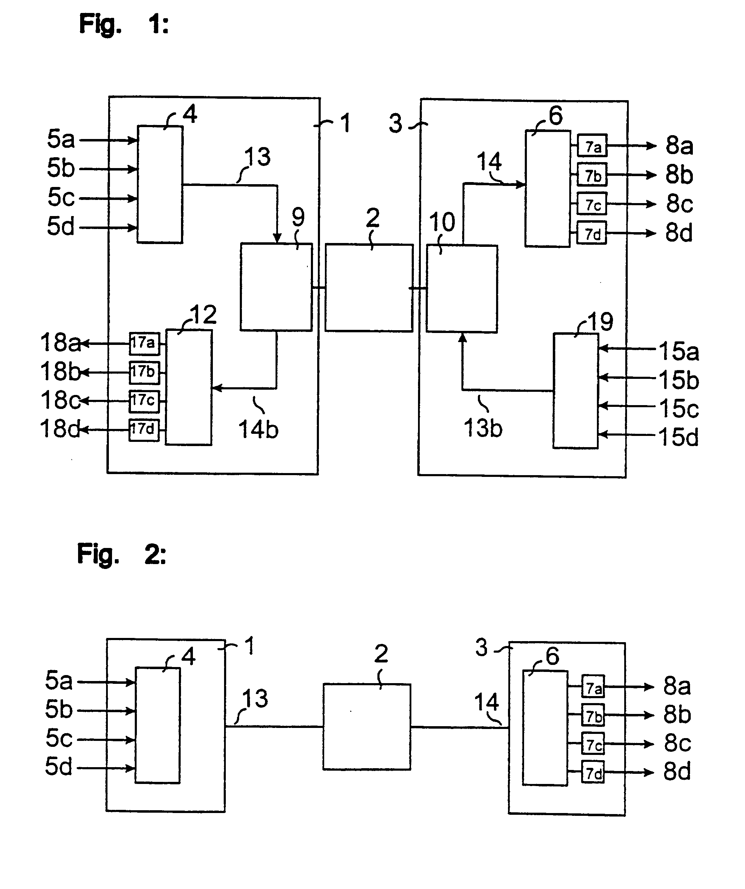

Fig. 1 beschreibt eine erfindungsgemäße Anordnung, bestehend aus einer ersten Sende-/Empfangseinheit 1, welche mittels der Übertragungseinrichtung 2 zur Übertragung von Signalen zwischen beweglichen Einheiten Signale an die zweite Sende-/Empfangseinheit 3 übermittelt. Die erste Sende-/Empfangseinheit 1 enthält eine erste Filterbank 4, welche aus den unterschiedlichen Eingangssignalen 5a, 5b, 5c, 5d jeweils charakteristische Spektralbereiche herausfiltert und diese zu einem Summensignal 13 addiert, welches mittels einer Richtungsweiche 9 an die Übertragungseinrichtung 2 übermittelt wird. Die zweite Sende-/Empfangseinheit 3 erhält von der Übertragungseinrichtung 2 das übertragene Signal, welches durch die Richtungsweiche 10 in Sende- und Empfangssignal getrennt und dann mittels der zweiten Filterbank 6 wieder in seine spektralen Bestandteile zerlegt wird. Die zweite Filterbank 6 ist derart dimensioniert, daß ihre spektrale Charakteristik der spektralen Charakteristik der ersten Filterbank 4 der ersten Sende-/Empfangseinheit entspricht. Die Ausgangssignale der zweiten Filterbank 6 werden an Signalregeneratoren 7a, 7b, 7c, 7d weitergeleitet, welche aus den Ausgangssignalen der Filterbank durch Verstärkung, Pulsformung oder andere regenerativer Maßnahmen ein weitestgehend dem Originalsignal entsprechendes Ausgangssignal 8a, 8b, 8c, 8d herstellen.

Der zweite Signalpfad in der Gegenrichtung ist entsprechend aufgebaut. Die Eingangssignale 15a, 15b, 15c, 15d werden mittels einer weiteren Filterbank 19 in der zweiten Sende-/Empfangseinheit zu einem Summensignal 13b aufbereitet und mittels der Richtungsweiche 10 über die Übertragungseinrichtung 2 an die erste Sende-/Empfangseinheit übermittelt. In dieser sorgt eine Richtungsweiche 9 für die richtungsselektive Aufteilung der Signale und übermittelt die in dieser Einheit empfangenen Signale 14b an eine weitere Filterbank 12, welche auf die ihr zugeordnete Filterbank 19 abgestimmt ist. Die Ausgangssignale der Filterbank 12 werden dann über die entsprechenden Signalregeneratoren 17a, 17b, 17c, 17d zu den Ausgangssignalen 18a, 18b, 18c, 18d verarbeitet. In dieser Anordnung haben die Richtungsweichen 9 (10) die Aufgabe, die Signale der beiden Signalflußrichtungen eindeutig voneinander zu trennen. Damit wird ein Summensignal 13 der ersten Filterbank 4 über die Richtungsweiche 9, die Übertragungseinrichtung 2 und die zweite Richtungsweiche 10 ausschließlich als Signal 14 an die zweite Filterbank 6 zur Auswertung weitergeleitet. Die Übertragungseinrichtung 2 muß hier für bidirektionalen Datenverkehr ausgelegt sein. Vom Summensignal 13 sollte nur ein verschwindend geringer Anteil über die Richtungsweiche 9 als Signal 14b an die weitere Filterbank 12 übertragen werden. Eine Signalübertragung auf die gleiche Seite der bewegten Anordnung ist explizit nicht gewünscht, macht technisch keinen Sinn und soll daher auch unterdrückt werden. Es sollen ausschließlich Signale über die Übertragungseinrichtung 2 übertragen werden. Vorteilhafterweise können die Richtungsweichen auch frequenzselektiv ausgelegt werden, so daß ihre Richtwirkung in speziellen Frequenzbändern, welche ausschließlich zur bidirektionalen Übertragung verwendet werden, am größten ist.

Fig. 2 zeigt eine der Erfindung entsprechende Anordnung zur unidirektionalen Datenübertragung. Hierin ist die erste Sende-/Empfangseinheit ausschließlich als Sendeeinheit ausgebildet. Weiterhin ist die zweite Sende-/Empfangseinheit ausschließlich als Empfangseinheit ausgebildet. Beide sind mittels einer Übertragungseinrichtung 2 miteinander verbunden. Da in diesem Fall die Sende-/Empfangseinheiten Daten ausschließlich in einer Richtung übertragen, können die beiden Richtungsweichen 9, 10 entfallen.

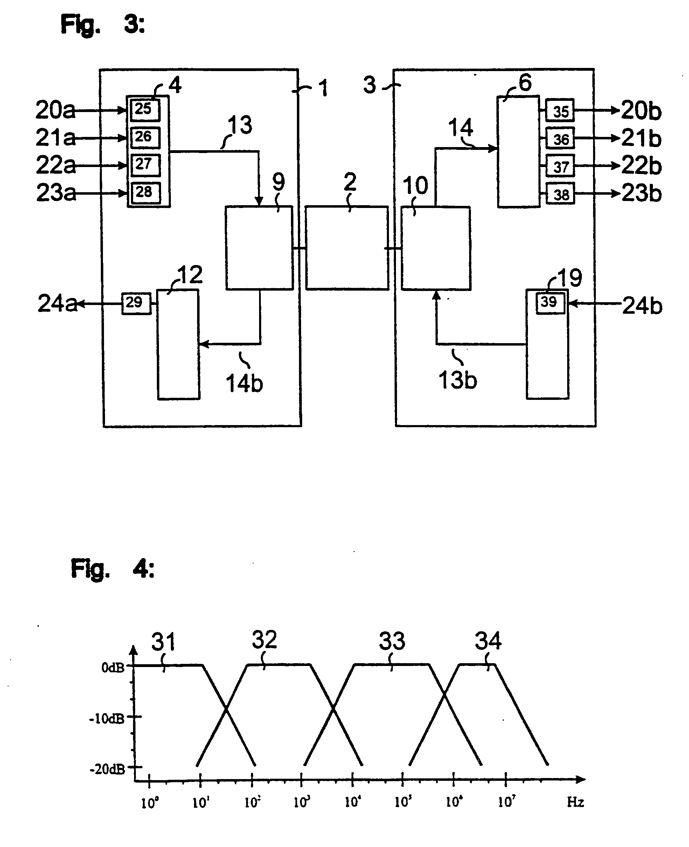

Fig. 3 zeigt eine beispielhafte Ausführung der erfindungsgemäßen Anordnung. Dieses Beispiel soll helfen, das Prinzip der Erfindung besser zu erläutern. Es sollen die folgenden Signale übertragen werden: ein langsames Relaissignal 20a mit einer Schaltrate von maximal 10 Hz; ein Audiosignal 21a bidirektional im Frequenzbereich bis 3,5 kHz; ein erstes Bussignal 22a im Halbduplexbetrieb mit einer maximalen Datenrate von 200 kBaud sowie ein zweites Bussignal 23a mit einer maximalen Datenrate von 4 MBaud in der ersten Richtung sowie ein drittes Bussignal 24a in der zweiten Richtung mit maximal 4 MBaud. Die Filterbank 4 in der ersten Sende-/Empfangseinheit enthält nun die folgenden Einheiten: ein erstes Filter mit Tiefpaßcharakteristik 25, welches eine Gleichstromübertragung für das Relais zuläßt und einen Durchlaßbereich bis 20 Hz hinauf besitzt. Zur Verarbeitung des Audiosignales 21a ist ein zweiter Filter 26 vorhanden, welcher eine Bandpaßcharakteristik im Frequenzbereich 100 - 3,5 kHz besitzt. Zur Verarbeitung des ersten Bussignales 22a wird ein dritter Filter 27 eingesetzt. Dieser Filter besitzt ebenfalls Bandpaßcharakteristik mit einem Frequenzbereich von 10 kHz bis 800 kHz. Die Verwendung von Bandpaßfiltern ist bei den meisten modernen Bussystemen zulässig, da diese durch geeignete Codierung (biphase, bit-staffing oder andere) eine gleichstromfreie bzw. bandbegrenzte Übertragung der Signale erlauben. Übertragung der Signale des zweiten Bussystems 23a erfolgt schließlich in einem Frequenzband von einem MHz bis 8 MHz. Da bei diesen Signalen der spektrale Abstand zu den Signalen des ersten Bussystems nicht weit genug ist, wird hier nicht das Basisband zur Übertragung eingesetzt, sondern aus den Rechtecksignalen des Bussystems ein höherer Frequenzbereich herausgefiltert. Durch die Bandpaßcharakteristik des Filters, welche die Grundwelle des übertragenen Signales unterdrückt, bleiben nur noch kurze Impulse (positive Impulse bei steigender Flanke, negative Impulse bei fallender Flanke), welche über die Leitung übertragen werden. Zum Empfang der Signale des dritten Bussystemes 24a enthält die Filterbank 12 des ersten Empfängers einen Filter mit Bandpaßcharakteristik entsprechend dem Filter 39 in der zweiten Sende-/Empfangseinheit 3. Beide Filter sollen hier, ebenso wie der Filter 28, auch eine Bandpaßcharakteristik im Frequenzbereich von 4 MHz bis 8 MHz besitzen. Zur Umwandlung der über die Übertragungseinrichtung übertragenen bandbegrenzten Impulse, in ein dem ursprünglichen Rechtecksignal entsprechendes Signal, dient ein erster Signalregenerator 29. Dieser kann hier im einfachsten Falle aus einem Komparator mit Hysterese bestehen. Die Signale in der ersten Sende-/Empfangseinheit 1 der Filterbank 4 sowie der Filterbank 12 werden nun über eine erste Richtungsweiche 9 richtungsselektiv zusammengefaßt und mittels der Übertragungseinrichtung 2 an die zweite Richtungsweiche 10 angekoppelt. Diese verkoppelt wiederum richtungsselektiv die Signale in der zweiten Sende-/Empfangseinheit 3 zur Filterbank 6 sowie zur Filterbank 19. Die zweite Sende-/Empfangseinheit 3 enthält einen Bandpaßfilter 30 zur Übertragung der Signale des zweiten Bussystemes in der zweiten Richtung sowie eine Filterbank 6, welche auf die Frequenzbänder der Filterbank 4 abgestimmt ist. Die Ausgangssignale dieser Filterbank 6 werden über entsprechende Signalregeneratoren 36, 37, 38 weiterverarbeitet. Eine Signalregeneration des Signals 20b (galvanisches Relaissignal) ist nicht notwendig. Die Regeneration des Audiosignales 21d erfolgt mittels eines einfachen Verstärkers. Das erste Prüfsignal wird durch einen Komparator in ein rechteckförmiges Signal gewandelt. Das zweite Bussignal 23b besteht am Ausgang der Filterbank 6 lediglich aus kurzen positiven oder negativen Impulsen. Im Signalregenerator wird durch einen Komparator mit geeigneter Hysterese oder durch ein anderes Speicherelement das Originalrechtecksignal wiederhergestellt.
Der besseren Übersicht halber wurden füreinander zugeordnete Eingangs- bzw. Ausgangssignale die gleichen Nummern, jedoch mit unterschiedlichen, nachstehenden Buchstaben vergeben. So wird aus dem Signal 20a nach der Übertragung durch das Übertragungssignal das Signal 20b, aus dem Signal 21a wird das Signal 21b und aus 22a wird 22b, aus 23a wird 23b und schließlich wird aus 24d (umgekehrte Übertragungsrichtung) Signal 24a.

Fig. 4 zeigt die Aufteilung in unterschiedliche Frequenzbereiche entsprechend dem Beispiel nach Fig. 3. Im Diagramm sind die Signalpegel gegen die Frequenz aufgetragen. Das niederfrequente Relaissignal 20a wird in dem niederfrequenten Spektrum 31 übertragen. Im darauffolgenden Spektralbereich 32 wird das Audiosignal 21a übertragen. Das erste Bussignal 22a wird in einem mittleren Frequenzbereich 33 übertragen. Schließlich wird das zweite Bussignal 23a bzw. 24a in beide Richtungen im gleichen Spektralbereich 34 übertragen. Die richtungsselektive Trennung erfolgt hier nicht durch die Verwendung unterschiedlicher Spektralbereiche, sondern durch den Einsatz von Richtungsweichen. Selbstverständlich ist die richtungsselektive Trennung durch unterschiedliche Signalbereiche auch Gegenstand der Erfindung.

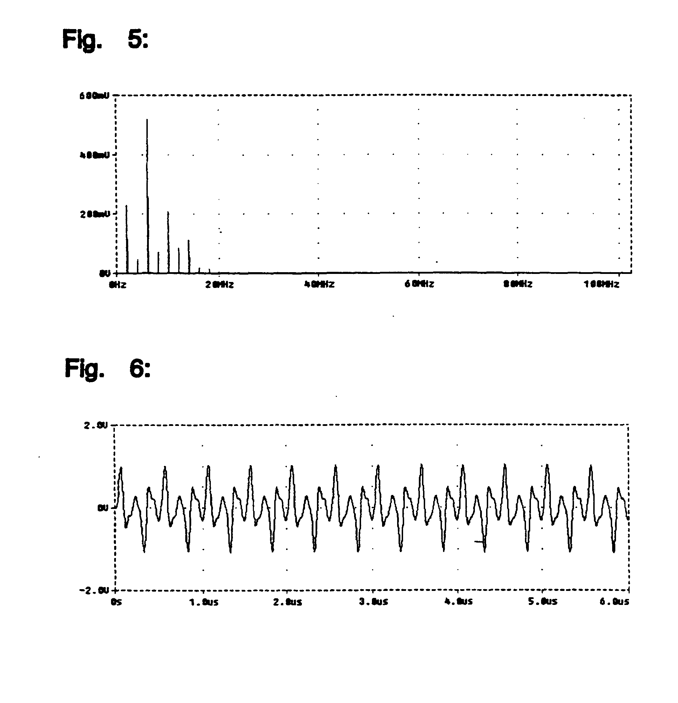

Fig. 5 zeigt entsprechend dem Beispiel nach Fig. 3 das Spektrum des zweiten Bussignals 23a, wie es über die Übertragungseinrichtung 2 übertragen wird. Hier ist dann eindeutig die begrenzte Bandbreite des Signales zu erkennen. Das charakteristische Linienspektrum ergibt sich aus dem rechteckigen Bussignal.

Fig. 6 zeigt entsprechend dem Beispiel nach Fig. 3 das Signal des zweiten Bussystemes 23a, wie es über die Übertragungseinrichtung 2 übertragen wird im Zeitbereich. Damit entspricht dieses Signal dem in Fig. 5 dargestellten Spektrum. Die hohen positiven sowie negativen Spitzen des Signals entstehen jeweils an den Zeitpunkten, an denen das zugrunde gelegte Rechtecksignal positive bzw. negative Flanken aufweist. Diese positiven bzw. negativen Signalspitzen können auf einfache Weise durch einen Komparator detektiert werden. Durch eine Speicherung, wie dies z.B. ein Komparator mit Hysterese tut, kann damit das Originalrechtecksignal rekonstruiert werden.

## Patentansprüche

1. Anordnung zur mehrkanaligen Signalübertragung zwischen beweglichen Einheiten bestehend aus mindestens einer ersten Sende-/Empfangseinheit (1), welche über Übertragungseinrichtungen (2) mit mindestens einer zweiten Sende-/Empfangseinheit (3) verbunden ist, wobei in jeweils der ersten und in der zweiten Sende-/Empfangseinheit aufeinander abgestimmte Filterbänke (4, 6, 12, 19) vorhanden sind, die vorgegebene spektrale Anteile aus den zu übertragenden Signalen herausfiltern, im Sendefalle diese Signale zu einem Summensignal (13, 13b) kombinieren, im Empfangsfalle diese Signale an zusätzlich vorhandene Signalregeneratoren (7a, 7b, 7c, 7d, 17a, 17b, 17c, 17d) zur Wiederherstellung des ursprünglichen Signals weiterleiten,
**dadurch gekennzeichnet, dass**
Richtungsweichen (9, 10) angeordnet sind, welche die Signale des Sende- und Empfangspfades voneinander trennen oder Sende- und Empfangssignale derart verknüpfen, dass sie über eine gemeinsame Übertragungseinrichtung übertragen werden und die Filterbänke derart gestaltet sind, dass sie charakteristische spektrale Anteile aus den zu übertragenden Signalen herausfiltern.

2. Anordnung nach Anspruch 1,
**dadurch gekennzeichnet, dass**
im Falle einer zusätzlichen Übertragung ausschließlich unidirektionaler Signale lediglich die jeweils erste Sende-/Empfangseinheit (1) eine Filterbank (4) erhält, die charakteristische spektrale Bereiche aus den einzelnen zu übertragenden Signalen herausfiltert und diese zu einem Summensignal (13) kombiniert, das direkt, ohne Richtungsweichen über die Übertragungseinrichtung (2) übertragen wird und, dass zusätzlich eine zweite Sende-/Empfangseinheit (3) ausschließlich für den Empfang konfiguriert ist, welche die Signale der Übertragungseinrichtung mittels einer zweiten Filterbank (6) ausfiltert und diese an zusätzlich vorhandene Signalregeneratoren (7a, 7b, 7c, 7d) zur Signalverarbeitung übermittelt.

3. Anordnung nach einem der Ansprüche 1 oder 2,
**dadurch gekennzeichnet, daß** im Falle der Übertragung bandbegrenzter Signale, welche nahezu in ihrem ganzen Spektrum erfaßt werden können, der Signalpfad dieser Signale zum Empfang ausschließlich eine Filterbank ohne nachfolgenden Signalregenerator vorsieht.

4. Anordnung nach einem der Ansprüche 1 bis 3,
**dadurch gekennzeichnet, daß** die Richtungsweiche selbst frequenzselektive Eigenschaften besitzt.

## Claims

1. Array for multi-channel signal transmission between mobile units, consisting of at least one first transmitter/receiver unit (1) that is coupled to at least one second transmitter/receiver unit (3) via transmitting means (2), to a second transmitter/receiver unit (3), with filter banks (4, 6, 12, 19) that are tuned with each other in the respective one of said first and second transmitter/receiver units, that filter predetermined spectral fractions out of the signals to be transmitted, that combine these signals to form a cumulative signal (13, 13) in the case of transmission, and that pass on these signals to additionally provided signal regenerators (7a, 7b, 7c, 7d, 17a, 17b, 17c, 17d) in the case of reception for regenerating the original signal,
**characterised in that**
directional switches (9, 10) are disposed that separate the signals of the transmission and reception path from each other or that combine transmitted and received signals with each other in such a manner that they will be transmitted via a common transmitting means, and that the filter banks are so designed that they filter characteristic spectral fractions out of the signals to be transmitted.

2. Array according to Claim 1,
**characterised in that**
in the case of an additional transmission of unidirectional signals exclusively, merely the respective first transmitter/receiver unit (1) comprises a filter bank (4) that filters the characteristic spectral ranges out of the individual signals to be transmitted and combines them to form a cumulative signal (13) that is transmitted directly, without directional switches, via said transmitting means (2), and that additionally a second transmitter/receiver unit (3) is configured exclusively for reception, which filters out the signals of said transmitting means by means of a second filter bank (6) and communicates them to additionally provided signal regenerators (7a, 7b, 7c, 7d) for signal processing.

3. Array according to any of the Claims 1 or 2,
**characterised in that**
in the case of transmission of signals limited in terms of bandwidth, which can be detected almost over their entire spectrum, the signal path of these signals provides for a filter bank only, without joining signal regenerators.

4. Array according to any of the Claims 1 to 3,
**characterised in that**
said directional switch in its turn displays properties of frequency selectivity.

## Revendications

1. Arrangement de transmission de signaux à plusieurs voies entre des unités mobiles, composé par au mois une première unité émetteur/récepteur (1), qui est reliée via un moyen de transmission (2) à une deuxième unité émetteur/récepteur (3), aux bancs aux filtres (4, 6, 12, 19) ajustés l'un à l'autre étant disposés respectivement dans la ladite première ou ladite deuxième unité émetteur/récepteur, lesquels bancs aux filtres filtrent des fractions spectrales déterminées des signaux à transmettre, et, au cas de transmission, combinent ces signaux afin de former un signal cumulé (13, 13), et, au cas de réception, passent ces signaux vers des régénérateurs de signaux (7a, 7b, 7c, 7d, 17a, 17b, 17c, 17d) disposés au plus pour la régénération du signal de départ,
**caractérisé en ce**
**que** des filtres à direction déterminée (9, 10) sont disposés, qui séparent les signaux de la voie de transmission et de réception l'une de l'autre ou combinent les signaux transmis et reçus l'un avec l'autre d'une manière, qu'ils soient transmis via un moyen de transmission commun, et en ce que lesdits bancs aux filtres sont conçus de façon, qu'ils filtrent des fractions spectrales caractéristiques des signaux à transmettre.

2. Arrangement selon la revendication 1,
**caractérisé en ce**
**qu'**au cas d'une transmission supplémentaire des signaux exclusivement unidirectionnels, seulement la première unité respective émetteur/récepteur (1) comprend un banc aux filtres (4), qui sert à filtrer les gammes spectrales caractéristiques des signaux individuels à transmettre, et les combine de manière à former un signal cumulé (13), qui est transmis directement, sans filtres à direction déterminée, via ledit moyen de transmission (2), et en ce qu'au plus, une deuxième unité émetteur/récepteur (3) est configurée exclusivement pour la réception, qui sert à filtrer les signaux dudit moyen de transmission moyennant un deuxième banc aux filtres (6) et à les transmettre aux régénérateurs de signaux (7a, 7b, 7c, 7d) supplémentaires pour le traitement des signaux.

3. Arrangement selon une quelconque des revendications 1 ou 2,
**caractérisé en ce**
**qu'**au cas de transmission de signaux limités en leur largeur de bande, qu'on peut détecter presque sur tout leur spectre, la voie de signaux de ces signaux est muni d'un seul banc aux filtres, sans des régénérateurs suivants de signaux.

4. Arrangement selon une quelconque des revendications 1 à 3,
**caractérisé en ce**
**que** ledit filtre à direction déterminée, à son tour, a des propriétés de sélectivité par fréquences.
